# EUROPÄISCHE PATENTSCHRIFT

(11) **EP 2 467 839 B1**
(45) Veröffentlichungstag und Bekanntmachung des Hinweises auf die Patenterteilung: **06.09.2017**
(21) Anmeldenummer: 10735278.3
(22) Anmeldetag: 21.07.2010
(51) Int. Cl.: G07F 13/02, G07F 15/00, G07F 17/00

(54) **VERFAHREN UND VORRICHTUNG ZUR IDENTIFIZIERUNG EINES ELEKTROFAHRZEUGS GEGENÜBER EINER ABRECHNUNGSZENTRALE**
METHOD AND DEVICE FOR IDENTIFYING AN ELECTRIC VEHICLE IN RELATION TO A BILLING SYSTEM
PROCÉDÉ ET DISPOSITIF PERMETTANT D'IDENTIFIER UN VÉHICULE ÉLECTRIQUE PAR RAPPORT À UNE CENTRALE DE COMPTABILISATION

(30) Priorität: 20.08.2009 DE 102009037968
(43) Veröffentlichungstag der Anmeldung: 27.06.2012
(73) Patentinhaber: innogy SE, 45128 Essen (DE)
(72) Erfinder: GAUL, Armin, 59379 Selm (DE); HELNERUS, Stefan, 59821Arnsberg (DE)
(74) Vertreter: Cohausz & Florack
(86) Internationale Anmeldenummer: PCT/EP2010/060582
(87) Internationale Veröffentlichungsnummer: WO 2011/020673

(56) Entgegenhaltungen:
- WO-A2-2009/052451
- DE-A1- 10 304 284

## Beschreibung

Der Gegenstand betrifft ein Verfahren zur Identifizierung eines Elektrofahrzeugs gegenüber einer Abrechnungszentrale sowie ein Verfahren zur Identifizierung eines Elektrofahrzeugs in einer Abrechnungszentrale. Darüber hinaus betrifft der Gegenstand eine Vorrichtung zur Durchführung eines solchen Verfahrens als auch ein System zur Durchführung eines solchen Verfahrens.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Aus der DE 103 04 284A1 ist eine Anordnung zur Identifikation zwischen einem Fahrzeug und einer Ladestation zur Energie- oder Treibstoffversorgung des Fahrzeugs bekannt. Hierbei sendet das Fahrzeug vor einem Ladevorgang das Fahrzeug identifizierende Daten aus.

Auch aus der WO 2009/052451 A2 ist ein Verfahren bekannt, bei dem eine Identifikation des zu ladenden Gerätes vor dem Ladevorgang von dem Gerät an die Ladestation übermittelt wird.

Die bei dem Ladevorgang bezogene Energiemenge muss dem Benutzer der Ladestation in Rechnung gestellt werden können. Insbesondere bei in öffentlichen Bereichen aufgestellten Ladestationen, welche eine Lademöglichkeit für eine unbestimmte Anzahl von Elektrofahrzeugen zur Verfügung stellen, ist es notwendig, dass der Benutzer des Fahrzeugs bzw. das Fahrzeug selbst sich gegenüber der Ladestation identifiziert und somit eine nutzerbezogene Abrechnung der bezogenen Energiemenge erfolgen kann. Eine Identifizierung des Fahrzeugs selbst, z.B. mittels einer Fahrzeugkennung, gegenüber der Ladestation ist jedoch mit dem Problem verbunden, dass hierüber eine Rückverfolgbarkeit des Fahrzeugs möglich ist. Eine solche Rückverfolgbarkeit eines Fahrzeugs ist jedoch aus verschiedensten Gründen nicht gewünscht.

Aus diesem Grunde lag dem Gegenstand die Aufgabe zugrunde, eine Identifizierung von Elektrofahrzeugen zu schaffen, welche keine Rückschlüsse auf das Fahrzeug selbst ermöglicht.

Diese Aufgabe wird gegenständlich durch ein Verfahren gemäß Anspruch 1 gelöst. Hierbei wird fahrzeugseitig ein Ladevorgang durchgeführt. Dieser Ladevorgang wird an einer Ladestation durchgeführt. Zum Beginn oder während eines Ladevorgangs werden fahrzeugseitig Informationen über den Ladevorgang ausgesendet. Diese Informationen können beispielsweise die Signalisierung der Ladebereitschaft des Fahrzeugs gegenüber der Ladestation sein. Darüber hinaus wird fahrzeugseitig ein aktueller Vertragsschlüssel nach dem fahrzeugseitigen Aussenden der Information über den Ladevorgang empfangen.

Es ist erkannt worden, dass zu Abrechnungszwecken bei einem Ladevorgang nicht die Identifizierung des Fahrzeugs selbst, beispielsweise eine Fahrgestellnummer oder eine sonstige eindeutig dem Fahrzeug zugeordnete Kennung verwendet wird, sondern ein Vertragsschlüssel. Ein Vertragsschlüssel kann eine eindeutige Kennung sein. Dies kann eine Ziffern- oder Zahlenfolge sein. Die Kennung kann Datenziffern und Prüfziffern enthalten. Diese Kennung kann mit einer Person, einem Vertrag oder sonstigen vertragsrelevanten Daten verknüpft sein.

Durch die Verwendung des Vertragsschlüssels ist sichergestellt, dass die bezogene Energiemenge dem Vertragspartner des Energielieferanten in Rechnung gestellt wird. Der Benutzer kann mit dem Energielieferanten einen bestimmten Energieliefervertrag abschließen und diesem Energieliefervertrag kann der Vertragsschlüssel zugeordnet werden. Mit Hilfe des Vertragsschlüssels kann die bezogene Energiemenge dem Benutzer in Rechnung gestellt werden. Es erfolgt eine benutzerbezogene Abrechnung und eine Rückverfolgbarkeit eines Fahrzeugs ist nicht mehr gegeben.

Bei bisherigen Lösungen musste für eine vertragsbezogene Abrechnung fahrzeugseitig oder ladestationsseitig eine Eingabe eines Vertragsschlüssels bei jedem Ladevorgang erfolgen. Diese Eingabe ist jedoch zeit- und kostenintensiv. Entweder erfolgte die Eingabe manuell durch den Benutzer selber, was den Benutzerkomfort erheblich senkte oder es müsste mittels eines Lesegerätes, beispielsweise eines Kartenlesegerätes, eine Vertragskennung automatisch ausgelesen werden. Dieses automatische Auslesen erhöht jedoch die Kosten der Ladestationen erheblich, da die entsprechende Elektronik hierfür zur Verfügung gestellt werden musste.

Dadurch, dass fahrzeugseitig bei vorzugsweise jedem Ladevorgang ein aktueller Vertragsschlüssel empfangen wird, ist es möglich, diesen aktuellen Vertragsschlüssel für darauffolgende Ladevorgänge zu verwenden. Die Abrechnungszentrale kann den Vertragsschlüssel an das Fahrzeug "pushen", so dass das Fahrzeug automatisch den aktuellen Vertragsschlüssel empfangen und speichern kann. Der aktuelle, aktive Vertragsschlüssel ist somit stets im Fahrzeug gespeichert bzw. wird zu Beginn, während oder unmittelbar nach einem Ladevorgang aktualisiert. Ändert sich ein Vertragsschlüssel, so kann diese Änderung durch das Übermitteln eines geänderten Vertragsschlüssels an das Fahrzeug nachvollzogen werden.

Gemäß einem vorteilhaften Ausführungsbeispiel wird vorgeschlagen, dass fahrzeugseitig ein Ladevorgang initiiert wird und dass eine Information über den initiierten Ladevorgang ausgesendet wird. Die Information über den initiierten Ladevorgang kann beispielsweise die Information des Fahrzeugs sein, bereit für einen Ladevorgang zu sein. Hierdurch wird fahrzeugseitig sichergestellt, dass eine Abrechnungszentrale über einen initiierten Ladevorgang informiert wird. Auch kann hierdurch veranlasst werden, dass in der Abrechnungszentrale ein Vertragsschlüssel ermittelt wird.

Nach dem Empfang der Informationen über das Initiieren eines Ladevorgangs kann in der Zentrale ein aktueller Vertragsschlüssel ermittelt werden. Dieser Vertragsschlüssel kann gemäß einem vorteilhaften Ausführungsbeispiel von der Abrechnungszentrale ausgesendet werden. Danach kann dieser Vertragsschlüssel in dem Fahrzeug empfangen werden. Hierdurch wird sichergestellt, dass nach vorzugsweise jeder Ladung ein aktueller Vertragsschlüssel in dem Fahrzeug vorhanden ist, über den eine spätere Abrechnung erfolgen kann.

Gemäß einem vorteilhaften Ausführungsbeispiel wird auch vorgeschlagen, dass ein fahrzeugseitiger Speicher auf das Vorhandensein eines gespeicherten Vertragsschlüssel überprüft wird und dass der aktuelle, empfangene Vertragsschlüssel bei einer negativen Überprüfung in den Speicher geschrieben wird und als gespeicherte Vertragsschlüssel verwendet wird. Insbesondere wenn in dem fahrzeugseitigen Speicher kein Vertragsschlüssel abgespeichert ist, kann der empfangene aktuelle Vertragsschlüssel als gespeicherter Vertragsschlüssel abgespeichert und verwendet werden. Dies ist insbesondere dann von Vorteil, wenn ein allererster Ladevorgang durchgeführt wird.

Für den Fall, dass noch kein Vertragsschlüssel in dem Fahrzeug gespeichert ist, beispielsweise bei einer allerersten Ladung, kann eine entsprechende Information fahrzeugseitig ausgesendet und in einer Abrechnungszentrale empfangen werden. Dies kann beispielsweise dadurch erfolgen, dass z.B. bei Aussenden der Information über den Ladevorgang, kein Vertragsschlüssel fahrzeugseitig versendet wird.

Dabei kann in der Abrechnungszentrale die Ladestation, bzw. deren Identifikationsnummer, bekannt sein bzw. durch die Ladestation bekannt gemacht werden, an der ein solches Fahrzeug lädt. Bei Beginn oder während des Ladevorgangs kann der Benutzer beispielsweise telefonisch in Kontakt mit einem Kunden-Center treten und einen aktuellen Vertragsschlüssel anfordern. Somit kann der Kunde gegenüber dem Energielieferanten seinen Wunsch äußern, einen Vertrag mit dem Energielieferanten abzuschließen.

Diesem noch nicht gültigen, da nicht unterschriebenen Vertrag, kann ein aktueller Vertragsschlüssel zugeordnet und an das Fahrzeug übermittelt werden. Zum Übermitteln an das Fahrzeug kann beispielsweise die Ladestation, bzw. deren Identifikationsnummer verwendet werden. Hierbei kann der Kunde beispielsweise die Nummer der Ladestation angeben, an der er derzeit sein Fahrzeug lädt, so dass an das Fahrzeug an dieser Ladestation der Vertragsschlüssel "gepusht" wird. Mit der Identifikationsnummer der Ladestation kann das Datenpaket, welches den aktuellen Vertragsschlüssel beinhaltet, adressiert werden.

Der aktuelle Vertragsschlüssel kann in der Abrechnungszentrale aus einer Datenbank mit einem Satz verfügbarer Vertragsschlüssel entnommen werden. In der Datenbank kann ein Pool mit verfügbaren Vertragsschlüsseln gespeichert sein.

Dem Kunden wird der Vertrag postalisch oder in sonstiger Weise zur Unterschrift zugeleitet. Solange der Vertrag nicht unterschrieben ist, ist der aktuelle Vertragsschlüssel schwebend unwirksam, jedoch bereits im Fahrzeug gespeichert.

Wird der Vertrag nun unterschrieben beim Energielieferanten empfangen, so kann der aktuelle Vertragsschlüssel wirksam gestellt werden. Somit kann der initiale Ladevorgang mit der Erstellung eines aktuellen, wirksamen Vertragsschlüssel abgeschlossen werden.

Bei einem darauffolgenden Ladevorgang kann der aktuelle Vertragsschlüssel für die Abrechnung verwendet werden. Hierbei kann vom Fahrzeug zum Beginn eines Ladevorgangs der aktuelle Vertragsschlüssel aus einem Speicher im Fahrzeug geladen werden. Dieser Vertragsschlüssel kann zum Einen beim Aussenden der Information über den Ladevorgang versendet werden und zum Anderen auch für Abrechnungszwecke verwendet werden, beispielsweise zum Ende einer Ladung.

Sollte dabei eine Kommunikation zwischen der Ladestation und der Abrechnungszentrale gestört sein, so kann der gespeicherte Vertragsschlüssel dennoch zu Abrechnungszwecken verwendet werden. Hierzu kann der aktuelle Vertragsschlüssel zum Ende eines Ladevorgangs zur Bestätigung einer bezogenen Energiemenge verwendet werden.

Wird der Vertrag nicht unterschrieben und versucht der Kunde dennoch, einen Ladevorgang zu starten, kann dieser Ladevorgang unterbunden werden. So kann beispielsweise beim Aussenden der Informationen über den Ladevorgang der schwebend unwirksame Vertragsschlüssel versendet werden. Dieser Vertragsschlüssel kann in der Abrechnungszentrale dazu genutzt werden, um festzustellen, dass der Ladevorgang ohne gültigen Vertrag angefordert wurde. Dabei wäre es möglich, einen, zwei oder mehr Ladevorgänge mit einem schwebend unwirksamen Vertragsschlüssel zuzulassen und den Kunden erneut anzuschreiben und an die Unterschrift zu erinnern. Dass ein solcher Ladevorgang ggf. nicht korrekt abgerechnet werden kann, wird hingenommen, da die Kosten eines manuellen Eintragens eines aktuellen Vertragsschlüssel vor jedem Ladevorgang erheblich höher liegen, als der entgangene Umsatz, wenn eine einzige Ladung nicht abgerechnet wird. Erst bei einem Überschreiten eine maximalen Anzahl von Ladevorgägen mit einem nicht gültigen Vertragsschlüssel kann ein Ladevorgang verweigert werden.

Es kann vorkommen, dass ein Fahrzeug sich mit einem ungültigen Vertragsschlüssel, beispielsweise einem abgelaufenen Vertragsschlüssel, an einer Ladestation anmeldet. In diesem Fall kann auch dieser Vertragsschlüssel an eine Abrechnungszentrale übermittelt werden. In der Abrechnungszentrale kann die Ungültigkeit des Vertragsschlüssels festgestellt werden. Wurde eine Mehrzahl von Ladeversuchen mit einem solchen ungültigen Schlüssel initiiert, kann der Ladevorgang abgebrochen werden. Sollte aber bereits ein neuer, geänderter Vertragsschlüssel in der Abrechnungszentrale vorliegen, kann dieser ermittelt werden. In der Abrechnungszentrale kann eine Historie von Vertragsschlüsseln gespeichert werden. Mit dieser Historie kann der eventuell geänderte Vertragsschlüssel ermittelt werden und an das Fahrzeug übermittelt werden. In diesem Fall ist spätestens zum Ende des Ladevorgang in dem Fahrzeug ein neuer aktueller Vertragsschlüssel gespeichert.

Ist in dem fahrzeugseitigen Speicher bereits ein Vertragsschlüssel abgespeichert, so wird gemäß einem vorteilhaften Ausführungsbeispiel dieser mit dem empfangenen verglichen und bei einer positiven Überprüfung verbleibt der in dem fahrzeugseitigen Speicher gespeicherte Vertragsschlüssel unverändert. Weicht der gespeicherte Vertragsschlüssel jedoch von dem empfangenen ab, so kann der gespeicherte Vertragsschlüssel durch den empfangenen Vertragsschlüssel ersetzt werden.

Gemäß einem vorteilhaften Ausführungsbeispiel wird daher vorgeschlagen, dass bei einem negativen Vergleich, insbesondere bei einer Nicht-Übereinstimmung des aktuellen Vertragsschlüssels mit dem gespeicherten Vertragsschlüssel, der empfangene aktuelle Vertragsschlüssel in dem fahrzeugseitigen Speicher gespeichert wird und als gespeicherter Vertragsschlüssel verwendet wird. Der bisher in dem Speicher gespeicherte Vertragsschlüssel kann gelöscht, verschoben oder als inaktiv markiert werden. Hierdurch wird sichergestellt, dass in einem darauffolgenden Ladevorgang ein aktueller Vertragsschlüssel verwendet wird. Somit ist eine darauffolgende Ladung mit einem aktuellen Vertragsschlüssel verknüpft und eine vertragsbezogene Abrechnung kann erfolgen.

Durch das jeweilige Abspeichern eines aktuellen Vertragsschlüssels wird sichergestellt, dass in einem Fahrzeug zumindest nach jeder Ladung ein aktueller Vertragsschlüssel vorhanden ist. Somit muss in einer Ladestation keine "White List" gepflegt werden, die erlaubte Vertragsschlüssel beinhaltet. Da in dem Fahrzeug immer der aktueller Vertragsschlüssel gespeichert ist, ist eine Überprüfung des Vertragsschlüssel vor einem Ladevorgang nicht zwingend erforderlich. Dies ist bei einer gestörten Kommunikation zwischen einer Ladestation und einer Abrechnungszentrale vorteilhaft. In einem solchen Fall wäre eine Überprüfung des Vertragsschlüssels in der Abrechnungszentrale nicht möglich. Da in dem Fahrzeug aber der aktuelle Vertragsschlüssel gespeichert ist, kann mit hoher Wahrscheinlichkeit von seiner Gültigkeit ausgegangen werden.

Um stets eine Statusinformation zu einem Vertragsschlüssel ermitteln zu können, wird vorgeschlagen, dass ein aktueller Vertragsschlüssel mit einem Schlüsselstatus in einem fahrzeugseitigen Speicher gespeichert wird. Dabei kann beispielsweise eine Mehrzahl von Vertragsschlüsseln von verschiedenen Energielieferanten in einer Tabelle gespeichert sein. In dieser Tabelle kann jedem Vertragsschlüssel ein Status zugeordnet werden. Dieser Status kann beispielsweise "aktiv" oder "inaktiv" sein. Der aktuelle Status kann beispielsweise von der Abrechnungszentrale ermittelt werden und zusammen mit dem aktuellen Vertragsschlüssel an das Fahrzeug übermittelt werden.

Gemäß einem vorteilhaften Ausführungsbeispiel wird vorgeschlagen, dass fahrzeugseitig zumindest ein gespeicherter Vertragsschlüssel und eine Information über eine bezogene Energiemenge ausgesendet wird. Diese Informationen können am Ende eines Ladevorgangs ausgesendet werden. Informationen über einen Ladevorgang können in einem Datenpaket zusammengefasst werden. Das Datenpaket kann neben einem Zählerstand auch noch einen Zählerstatus, eine Zähleridentifikation, eine Ladestationsidentifikation, eine Zeitinformation und/oder einen öffentlichen Messgeräteschlüssel aufweisen.

Mit Hilfe des gespeicherten Vertragsschlüssels und der bezogenen Energiemenge ist es möglich, die bezogene Energiemenge einem Vertrag zuzuordnen und in Rechnung zu stellen.

Gemäß einem vorteilhaften Ausführungsbeispiel wird vorgeschlagen, dass der aktuelle Vertragsschlüssel ein Paar aus öffentlichen Vertragsschlüssel und privaten Vertragsschlüssel enthält. Insbesondere kann in diesem Fall die in Schritt b) übermittelte Information mittels des privaten Vertragsschlüssels verschlüsselt und/oder signiert werden. Eine Signatur kann beispielsweise durch die Verwendung eines Hash-Codes vorgenommen werden. Mittels der Signatur ist es möglich, Datenintegrität und Authentizität sicherzustellen. Insbesondere ist es möglich, mit dem privaten Vertragsschlüssel den Hash-Code zu verschlüsseln, um eine kryptographische Signatur zu erhalten. In der Abrechnungszentrale kann dann mit Hilfe des öffentlichen Vertragsschlüssels die Integrität und Authentizität der empfangenen Daten überprüft werden.

Die Begriffe "Signatur", "signieren" etc werden im Sinne einer elektronischen, datentechnischen Signatur verwendet. Auch kann durch das elektronische Signieren der Informationen zu einem Ladevorgang, beispielsweise in Form eines Datenpakets, sichergestellt werden, dass dieses nicht mehr nachträglich manipuliert wird.

Die Ladestation kann neben der Energiemenge zumindest auch eine Identifikation des Messgeräts erfassen. Dies kann eine Gerätenummer sein. Die Identifikation des Messgeräts kann auch die zusätzliche Identifikation der Ladestation sein. Mit Hilfe zumindest dieser Werte wird ein Datenpaket erstellt.

Ein solches Datenpaket kann in der Ladestation elektronisch signiert werden. Dies ermöglicht es, die Authentizität und Integrität des Datenpakets zu überprüfen. Das elektronisch signierte Datenpaket kann an das Elektrofahrzeug übermittelt werden.

Das in dem Elektrofahrzeug empfangene Datenpaket kann in dem Fahrzeug noch um zumindest den Vertragsschlüssel ergänzt und im Fahrzeug mit dem Vertragsschlüssel signiert werden.

Mit Hilfe eines eindeutigen, aus dem Datenpaket und dem Vertragsschlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines gespeicherten Vertragsschlüssels errechnet werden. Auch kann eine Signatur unmittelbar aus dem Datenpaket und dem Vertragsschlüssel errechnet werden.

Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Ladestation erstellt wurde. Hierzu kann beispielsweise mit einem empfängerseitig bekannten, zu dem Signaturschlüssel passendem Schlüssel der Referenzwert oder das zu signierende Datenpaket aus der Signatur zurück errechnet werden. Dazu kann beispielsweise empfängerseitig ein Vergleichs-Referenzwert ausgehend von dem Datenpaket errechnet werden. Stimmen errechneter Referenzwert und Vergleichs-Referenzwert überein, kann von einer Datenintegrität ausgegangen werden.

Beispielsweise kann aus Nutzdaten ein Referenzwert berechnet werden. Aus diesem Referenzwert kann mit einem privaten Schlüssel eine Signatur errechnet werden. Die Signatur kann zusammen mit den Nutzdaten in einem Datencontainer, als zwei getrennte Dateien oder eingebettet in die Nutzdaten, an einen Empfänger verschickt werden. Der Empfänger kann mit einem zum privaten Schlüssel passendem öffentlichen Schlüssel aus der Signatur den Referenzwert errechnen. Aus den ebenfalls empfangenen Nutzdaten kann empfängerseitig ebenfalls ein Vergleichs-Referenzwert berechnet werden. Stimmen Referenzwert und Vergleichs-Referenzwert überein, kann die Integrität, Authentifizierung, Authentizität der Nutzdaten sichergestellt werden.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Ändern sich bei der Übertragung Werte innerhalb des Datenpakets, so kann empfängerseitig, bspw. der Abrechnungszentrale, festgestellt werden, dass die mit dem Datenpaket übertragene Signatur nicht zu dem empfangenen Datenpaket passt und eine Veränderung des Datenpakets stattgefunden haben muss. Der Vergleich der empfangenen Signatur mit einer errechneten Vergleichs-Signatur oder der Vergleich eines Referenzwertes mit einem Vergleichs-Referenzwertes ergibt bei veränderten Daten einen Unterschied zwischen diesen beiden Werten.

Gemäß einem weiteren Gegenstand wird ein Verfahren zur Identifizierung eines Elektrofahrzeug in einer Abrechnungszentrale beansprucht. Hierbei werden abrechnungszentralseitig Informationen über einen Ladevorgang von einem Elektrofahrzeug empfangen. Abrechnungszentralseitig kann ein aktueller Vertragsschlüssel freigeschaltet werden und anschließend ausgesendet werden. In der Abrechnungszentrale ist es möglich, einen aktuellen Vertragsschlüssel zu "pushen", was bedeutet, dass der aktuelle Vertragsschlüssel automatisch ausgesendet wird, um in dem Fahrzeug empfangen werden zu können.

Gemäß einem vorteilhaften Ausführungsbeispiel wird vorgeschlagen, dass abrechnungszentralseitig Informationen über einen initiierten Ladevorgang empfangen werden und dass nach dem Empfangen der Informationen über den initiierten Ladevorgang der aktuelle Vertragsschlüssel ausgesendet wird. Auch wird vorgeschlagen, dass der aktuelle Vertragsschlüssel an das Fahrzeug gepusht wird.

Ein weiterer Gegenstand ist eine Vorrichtung, insbesondere zur Durchführung eines zuvor genannten Verfahrens. Die Vorrichtung weist Lademittel eingerichtet zum fahrzeugseitigen Durchführen eines Ladevorgangs an einer Ladestation auf. Die Vorrichtung weist auch Kommunikationsmittel eingerichtet zum fahrzeugseitigen Aussenden einer Information über den Ladevorgang, und zum fahrzeugseitigen Empfangen eines aktuellen Vertragsschlüssels nach dem fahrzeugseitigen Aussenden der Informationen über den Ladevorgang auf. Auch sind Speichermittel eingerichtet zum Speichern eines aktuellen Vertragsschlüssels vorgesehen. Darüber hinaus sind Vergleichsmittel zum Vergleichen eines empfangenen aktuellen Vertragsschlüssels mit einem gespeicherten Vertragsschlüssel vorgesehen.

Darüber hinaus ist ein System mit einer zuvor genannten Vorrichtung und einer Abrechnungszentrale beansprucht. Die Abrechnungszentrale kann Kommunikationsmittel eingerichtet zum Empfangen von Informationen über einen Ladevorgang von einem Elektrofahrzeug und zum Aussenden eines aktuellen Vertragsschlüssels aufweisen. Auch können Verarbeitungsmittel eingerichtet zum Freischalten eines aktuellen Vertragsschlüssels in der Abrechnungszentrale vorhanden sein.

Die zuvor genannten Verfahren können auch als Computerprogramm oder als auf einem Speichermedium gespeichertes Computerprogramm realisiert werden. Hierbei kann fahrzeugseitig, ladestationsseitig und/oder abrechnungszentralenseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: schematisch einen Aufbau eines gegenständlichen Systems gemäß eines Ausführungsbeispiels;
- Fig. 2: ein Nachrichtdiagramm entsprechend eines Verfahrens gemäß eines vorteilhaften Ausführungsbeispiels bei einer ersten Ladung und einer anschließenden Ladung;
- Fig. 3: ein Nachrichtdiagramm entsprechend eines Verfahrens gemäß eines vorteilhaften Ausführungsbeispiels bei einer Ladung mit einem ungültigen Vertragsschlüssel;

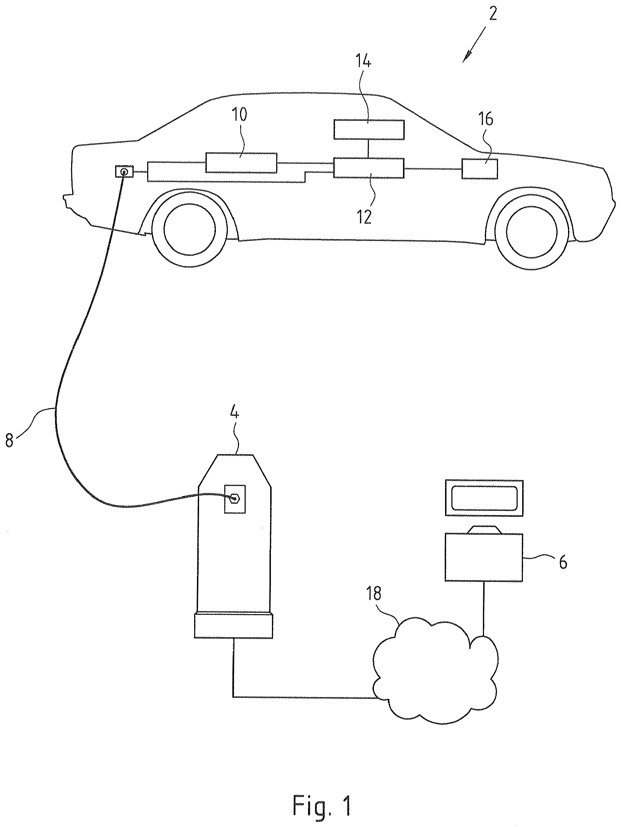

Fig. 1 zeigt ein System zur Durchführung eines gegenständlichen Verfahrens. Gezeigt ist ein Elektrofahrzeug 2, eine Ladestation 4 sowie eine Abrechnungszentrale 6. Die Ladestation 4 ist mit dem Fahrzeug 2 über ein Ladekabel 8 verbunden. Mittels des Ladekabels 8 können sowohl elektrische Energie als auch Informationen in Form von Datenpaketen zwischen Ladestation 4 und Elektrofahrzeug 2 ausgetauscht werden.

In dem Elektrofahrzeug 2 ist eine Kommunikationseinrichtung 10 angeordnet, welche zumindest an die Datenleitung des Ladekabels 8 angeschlossen ist. Darüber hinaus ist in dem Elektrofahrzeug 2 eine Ladesteuerschaltung 12 und ein Datenspeicher 14 vorgesehen. Der Datenspeicher kann einen überschreibbaren Speicher als auch einen nicht überschreibbaren Speicher aufweisen. Schließlich ist in dem Elektrofahrzeug 2 eine Elektrobatterie 16 zum Speisen eines nicht dargestellten Elektromotors vorgesehen.

Mittels der Ladesteuerschaltung 12 kann die über das Ladekabel 8 von der Ladestation 4 bezogene elektrische Energie der Batterie 16 zugeführt werden und die Batterie 16 kann aufgeladen werden. Über das Ladekabel 8 kann die Ladesteuerschaltung 12 mittels der Kommunikationseinrichtung 10 mit der Ladestation 4 kommunizieren. Die so kommunizierten Daten können von der Ladestation 4 über ein Datennetz 18 an die Abrechnungszentrale 6 übermittelt werden. Die Abrechnungszentrale 6 kann ebenfalls über das Datennetz 18 und die Ladestation 4 mit dem Elektrofahrzeug 2 kommunizieren. Zum Austausch von Vertragsschlüsseln wird das System wie folgt beschrieben betrieben:

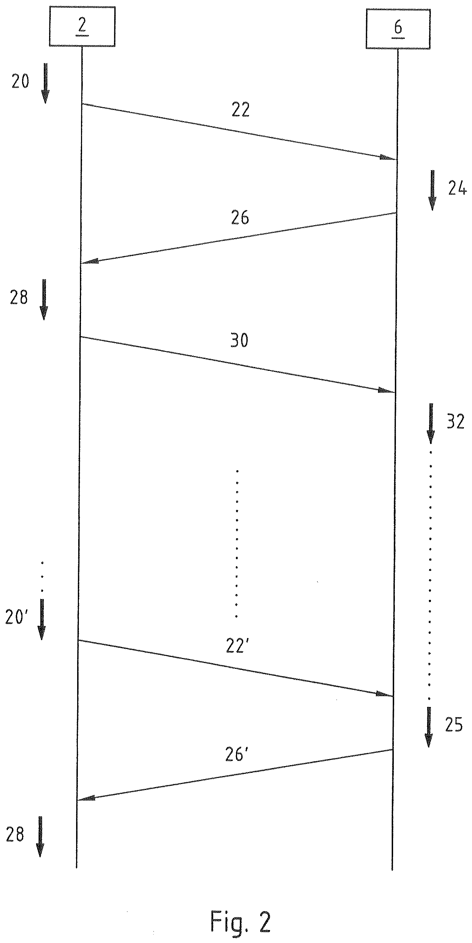

Fig. 2 zeigt ein Nachrichtendiagramm zur Durchführung eines gegenständlichen Verfahrens bei einem ersten Ladevorgang. Zu Beginn eines Ladevorgangs wird dieser initiiert (20). Hierbei wird in dem Elektrofahrzeug 2 mittels der Ladesteuerschaltung 12 der Ladezustand der Batterie 16 ermittelt. Darüber hinaus werden Ladeparameter über das Ladekabel 8 mit der Ladestation 4 ausgetauscht. Ladeparameter können beispielsweise maximale Stromstärke, Stromtarife, maximale Energiemengen, variable Stromstärken zu bestimmten Zeiten und dergleichen sein.

Die Ladesteuerschaltung 12 kommuniziert mittels der Kommunikationseinrichtung 10 über das Ladekabel 8 mit der Ladestation 4 die Ladeparameter. Nach erfolgreichem Austausch von Ladeparametern kann ein Ladevorgang beginnen.

Die Ladestation 4 schaltet nach erfolgreichem Aushandeln von Ladeparametern den Ladestrom über das Ladekabel 8 frei und die Batterie 16 kann geladen werden.

Nach erfolgreichem Initiieren (20) des Ladevorgangs werden Informationen über das Initiieren des Ladevorgangs von dem Fahrzeug 2 über die Ladestation 4 und das Datennetz 18 an die Abrechnungszentrale 6 gesendet (22).

Bei einem ersten Ladevorgang ist eine Identifikation des Fahrzeugs eventuell noch nicht möglich. In dem Speicher 14 ist gegebenenfalls noch kein aktueller Vertragsschlüssel gespeichert. Sowohl der überscheibbare Speicher als auch der nicht löschbare Speicher im Datenspeicher 14 sind leer.

Bei diesem allerersten Ladevorgang wird beim Initiieren (20) des Ladevorgangs im Datenspeicher 14 des Fahrzeugs 2 kein gültiger Vertragsschlüssel ermittelt. Somit wird beim Aussenden (22) der Information über das Initiieren des Ladevorgangs kein gültiger Vertragsschlüssel an die Abrechnungszentrale 6 übermittelt.

In einem solchen Fall kann ein Benutzer parallel zum Senden (22) der Informationen beispielsweise über ein Kommunikationsnetz Kontakt mit der Abrechnungszentrale aufnehmen und um die Erstellung eines Vertragschlüssels bitten. Entsprechend kann in der Abrechnungszentrale ein aktueller Vertragsschlüssel erstellt werden. Parallel dazu kann in der Abrechnungszentrale ein Energieliefervertrag erstellt und an den Kunden versendet werden.

Empfängt die Abrechnungszentrale Informationen über das Initiieren, wird in der Abrechnungszentrale 6 ein Vertragsschlüssel, beispielsweise wie zuvor beschrieben, freigeschaltet (24). Dies kann manuell oder automatisch erfolgen. Mit dem Freischalten (24) des Vertragsschlüssels wird dieser Vertragsschlüssel einem bestimmten Energieliefervertrag zugeordnet. Somit sind Vertragsparameter, wie Kosten pro kWh, maximale Stromstärken, Ladezeitenrestrektionen und dergleichen über den Vertragsschlüssel abrufbar.

Dem Kunden wird eine Ausfertigung des Vertrages zugeschickt und der Kunde muss den Vertrag unterschreiben, um ihn rechtgültig werden zu lassen. Wird von dem Energielieferanten der unterschriebene Vertrag empfangen, so kann der bisher nur schwebend wirksame Vertragsschlüssel tatsächlich aktiviert werden und für zukünftige Abrechnungen von Strombezügen verwendet werden.

Die Abrechnungszentrale 6 sendet den aktuellen Vertragsschlüssel aus. Dieser wird in dem Fahrzeug 2 empfangen (26). Daraufhin überprüft (28) das Fahrzeug mittels der Ladesteuerschaltung 12, ob in dem Datenspeicher 14 ein Vertragsschlüssel gespeichert ist. Da dies beim ersten Laden nicht der Fall ist, wird der Datenspeicher 14 mit dem empfangen (26) aktuellen Vertragsschlüssel gefüllt. Hierbei kann der aktuelle Vertragsschlüssel sowohl in den überschreibbaren Speicher als auch den nicht löschbaren Speicher gespeichert werden.

Darüber hinaus kann in Schritt 28 der Ladevorgang abgeschlossen werden.

Nach Abschluss des Ladevorgangs wird dies von der Ladesteuerschaltung 12 der Ladestation 4 mitgeteilt, woraufhin die Ladestation 4 die Energieversorgung zum Fahrzeug 2 trennt und ein Energiebezug über das Ladekabel 8 nicht mehr möglich ist. Anschießend tauscht die Ladesteuerschaltung 12 mit der Ladestation 4 Informationen über die bezogene Energiemenge aus. Diese Informationen können in Form von Datenpaketen ausgetauscht werden. Weitere Informationen über den Ladevorgang können beispielsweise ein Zählerstand eines Messgerätes in der Ladestation 4, eine Identifikation der Ladestation 4 und/oder die Identifikation des Messgerätes, ein Zeitstempel, ein Zeit-Index, ein Status der Ladestation 4 und/oder ein Status des Messgerätes, ein Anfangszählerstand, ein Endzählerstand und/oder dergleichen sein.

Beispielsweise ist es möglich, dass die Ladestation 4 die bezogene Energiemenge an das Fahrzeug 2 übermittelt. In dem Fahrzeug 2 wird die Information über die bezogene Energiemenge verschlüsselt und/oder signiert. Hierzu wird der in dem Datenspeicher 14 gespeicherte Vertragsschlüssel verwendet. Dies kann beispielsweise ein privater Vertragsschlüssel sein. Beispielsweise kann aus der Information über die bezogene Energiemenge ein Hash-Wert erzeugt werden. Aus diesem Hash-Wert kann mittels des privaten Vertragsschlüssels eine kryptographische Signatur erstellt werden. Die so signierte Information über den Ladevorgang kann von dem Fahrzeug 2 versendet (30) werden.

In der Abrechnungszentrale 6 wird diese Information empfangen und zu Abrechnungszwecken verwendet (32). Mit Hilfe eines in der Abrechnungszentrale 6 bekannten öffentlichen Vertragsschlüssels kann die Signatur überprüft werden und/oder eine Entschlüsselung der empfangenen Daten erfolgen.

Bei einem späteren Ladevorgang kann beim Initiieren (20') des Ladevorgangs der aktuelle Vertragsschlüssel aus dem Datenspeicher 14 ausgelesen werden. Das Fahrzeug 2 kann beim Initiieren (20') des Ladevorgangs diesen Vertragsschlüssel und weitere Informationen über das Initiieren des Ladevorgangs aussenden (22'). In der Abrechnungszentrale 6 wird diese Information empfangen und in dem Schritt 25 kann die empfangene Information, insbesondere der empfangene Vertragsschlüssel mit aktuellen Vertragsschlüsseln verglichen werden. Hat sich ein Vertragsschlüssel geändert, beispielsweise durch ein Übergang eines Vertrages oder eine Änderung eines Vertrages, kann dies in dem Schritt 26' von der Abrechnungszentrale 6 an das Fahrzeug 2 dadurch kommuniziert werden, dass ein neuer, aktueller Vertragsschlüssel versendet wird.

Auch kann überprüft werden, ob ein schwebend wirksamer Vertragsschlüssel verwendet wird. Ist dies der Fall, kann der Strombezug unterbrochen oder nicht freigeschaltet werden. Außerdem kann ein Erinnerungsschreiben an den Kunden erstellt werden, um ihn an die Übersendung des unterschriebenen Vertrages zu erinnern. Auch kann gespeichert werden, dass der Vertragsschlüssel verwendet wurde um so erst bei einem eventuell dritten oder vierten Versuch der Ladung mit dem schwebend wirksamen Vertragsschlüssel die Ladung zu unterbinden.

Auch ist es möglich, Vertragsschlüssel auf eine "Black List" zu speichern. In einer solchen Liste können eventuell alle Vertragsschlüssel gespeichert sein, zu welchen die Rechnung nicht bezahlt wurde oder bei welchen der zugehörige Ladevorgang fehlerhaft war, bspw. wurde eine zu hohe Stromstärke bezogen oder es wurde ein fehlerhaftes Kabel verwendet.

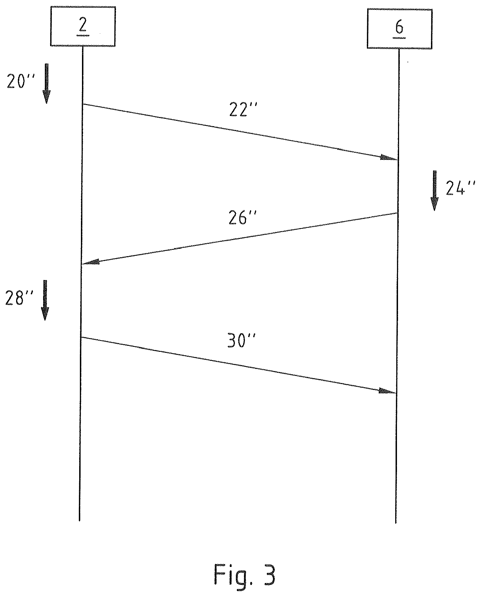

Figur 3 zeigt ein Nachrichtendiagramm bei dem ein ungültiger Vertragsschlüssel verwendet wird. Im Schritt 20" wird bei Initiieren des Ladevorgangs ein ungültiger Vertragsschlüssel ermittelt. Dieser kann in Schritt 22" an die Abrechnungszentrale 6 übermittelt werden. Dort kann in Schritt 24" festgestellt werden, dass der Vertragsschlüssel ungültig ist. In diesem Fall kann beispielsweise ein aktueller Vertragsschlüssel mit Hilfe des ungültigen Vertragsschlüssels ermittelt werden. Dies kann beispielsweise bei einer Änderung eines Vertrags der Fall sein. Kann ein aktueller Vertragsschlüssel ermittelt werden, kann dieser in Schritt 26" an das Fahrzeug 2 übermittelt werden. Dann kann mit den Schritten 28" und 30" analog zu den Schritten 28, 30 fortgesetzt werden. Anderenfalls kann in Schritt 26" ein Fortsetzen des Ladevorgangs unterbunden werden.

Durch das Übermitteln eines aktuellen Vertragsschlüssels von der Abrechnungszentrale 6 an das Fahrzeug 2 zu Beginn, während und/oder zum Ende eines jeden Ladevorgangs ist sichergestellt, dass in dem Fahrzeug 2 ein aktueller Vertragsschlüssel vorhanden ist. Außerdem ist sichergestellt, dass spätestens nach dem ersten Laden mit einem ungültigen Vertragsschlüssel ein weiteres Laden mit einem gültigen Vertragsschlüssel durchgeführt wird. Durch die automatische Aktualisierung des Vertragsschlüssels ist eine manuelle Eingabe eines Vertragsschlüssels unnötig. Dies vermindert die Kosten und ermöglicht eine vertragsbezogene Abrechnung. Eine Rückverfolgbarkeit des Elektrofahrzeugs mittels einer Fahrzeugkennung ist nicht gegeben.

## Patentansprüche

1. Verfahren zur Kommunikation eines Elektrofahrzeugs mit einer Abrechnungszentrale mit den Schritten,
a) fahrzeugseitiges Durchführen (28) eines Ladevorgangs an einer Ladestation,
b) fahrzeugseitiges Aussenden (30) einer Information über den Ladevorgang, wobei für den Fall, dass noch kein Vertragsschlüssel fahrzeugseitig gespeichert ist, eine entsprechende Information ausgesendet wird und für den Fall, dass ein Vertragsschlüssel fahrzeugseitig gespeichert ist, der gespeicherte Vertragsschlüssel fahrzeugseitig ausgesendet wird,
c) fahrzeugseitiges Empfangen (34) eines aktuellen Vertragsschlüssels nach dem fahrzeugseitigen Aussenden der Information über den Ladevorgang,
d) fahrzeugseitiges Abspeichern des empfangenen Vertragsschlüssels.

2. Verfahren nach Anspruch 1, **dadurch gekennzeichnet, dass** fahrzeugsseitig ein Ladevorgang initiiert (20) wird und dass eine Information über den initiierten Ladevorgang ausgesendet (22) wird.

3. Verfahren nach Anspruch 2, **dadurch gekennzeichnet, dass** nach dem Aussenden (22) der Information über den initiierten Ladevorgang der aktuelle Vertragsschlüssel empfangen (26) wird.

4. Verfahren nach einem der Ansprüche 1 bis 3, **dadurch gekennzeichnet, dass** ein fahrzeugseitiger Speicher (14) auf einen gespeicherten Vertragsschlüssel überprüft (28) wird und dass der aktuelle Vertragsschlüssel bei einer negativen Überprüfung in den Speicher geschrieben wird und als gespeicherter Vertragsschlüssel verwendet wird.

5. Verfahren nach Anspruch 3 oder 4, **dadurch gekennzeichnet,** ein fahrzeugseitiger Speicher (14) auf einen gespeicherten Vertragsschlüssel überprüft (28) wird und dass der gespeicherte Vertragsschlüssel bei einer positiven Überprüfung in dem Speicher verbleibt.

6. Verfahren nach einem der Ansprüche 1 bis 5, **dadurch gekennzeichnet, dass** ein aktueller Vertragsschlüssel zusammen mit einem Schlüsselstatus in dem fahrzeugseitigen Speicher gespeichert wird.

7. Verfahren nach einem der Ansprüche 1 bis 6, **dadurch gekennzeichnet, dass** fahrzeugseitig zumindest ein gespeicherter Vertragsschlüssel und eine Information über eine bezogene Energiemenge ausgesendet wird.

8. Verfahren nach einem der Ansprüche 1 bis 7, **dadurch gekennzeichnet, dass** der aktuelle Vertragsschlüssel ein Paar aus öffentlichem Vertragsschlüssel und privatem Vertragsschlüssel enthält.

9. Verfahren zur Kommunikation eines Elektrofahrzeugs mit einer Abrechnungszentrale mit den Schritten,
- abrechnungszentralenseitiges Empfangen von Informationen über einen Ladevorgang von einem Elektrofahrzeug,
- für den Fall, dass kein Vertragsschlüssel abrechnungszentralseitig empfangen wird,
- abrechnungszentralenseitiges Freischalten (24) eines aktuellen Vertragsschlüssels, und
- abrechnungszentralenseitiges Aussenden (26, 34) des aktuellen Vertragsschlüssels,
- für den Fall, dass ein Vertragsschlüssel abrechnungszentralseitig empfangen wird,
- abrechnungszentralseitiges Vergleichen des empfangenen Vertragsschlüssels mit aktuellen Vertragsschlüsseln und Versenden eines neuen, aktuellen Vertragsschlüssels, wenn sich der Vertragsschlüssel geändert hat.

10. Verfahren nach Anspruch 9, **dadurch gekennzeichnet, dass** abrechnungszentralenseitig Informationen über einen initiierten Ladevorgang empfangen (22) werden und dass nach dem Empfang der Informationen über den initiierten Ladevorgang der aktuelle Vertragsschlüssel ausgesendet (26) wird.

11. Verfahren nach Anspruch 9 oder 10, **dadurch gekennzeichnet, dass** der aktuelle Vertragsschlüssel an das Fahrzeug gepusht wird.

12. Vorrichtung eingerichtet zur Durchführung eines Verfahrens nach einem der vorangehenden Ansprüche 1 bis 8, mit
- Lademitteln (12) eingerichtet zum fahrzeugseitigen Durchführen eines Ladevorgangs an einer Ladestation (4),
- Kommunikationsmitteln (10) eingerichtet zum fahrzeugseitiges Aussenden einer Information über den Ladevorgang, und zum fahrzeugseitigen Empfangen eines aktuellen Vertragsschlüssels nach dem fahrzeugseitigen Aussenden der Information über den Ladevorgang,
wobei die Kommunikationsmittel dazu ausgelegt sind, für den Fall, dass noch kein Vertragsschlüssel fahrzeugseitig gespeichert ist, eine entsprechende Information auszusenden und für den Fall, dass ein Vertragsschlüssel fahrzeugseitig gespeichert ist, den gespeicherten Vertragsschlüssel auszusenden,
- Speichermitteln (14) eingerichtet zum Speichern eines aktuellen Vertragsschlüssels, und
- Vergleichsmitteln (12) eingerichtet zum Vergleichen eines empfangenen aktuellen Vertragsschlüssels mit einem gespeicherten Vertragsschlüssel.

13. System mit einer Vorrichtung nach Anspruch 12 und einer Abrechnungszentrale mit
- Kommunikatinsmitteln eingerichtet zum Empfangen von Informationen über einen Ladevorgang von einem Elektrofahrzeug und zum Aussenden eines aktuellen Vertragsschlüssels, und
- Verarbeitungsmitteln eingerichtet zum Freischalten eines aktuellen Vertragsschlüssels.

## Claims

1. Method for providing communication between an electric vehicle and a billing centre including the steps:
a) carrying out (28) on the vehicle side a charging process at a charging station,
b) emitting (30) on the vehicle side an item of information about the charging process, wherein in case no contract key is stored on the vehicle side, a corresponding information is send out, and in case a contract key is stored on the vehicle side, the stored key is send out from the vehicle side,
c) receiving (34) on the vehicle side a current contract key after the emission on the vehicle side of the information about the charging process,
d) storing the received contract key on the vehicle side.

2. Method according to claim 1, **characterised in that** a charging process is initiated (20) on the vehicle side and **in that** an item of information about the initiated charging process is emitted (22).

3. Method according to claim 2, **characterised in that** the current contract key is received (26) after the emission (22) of the information about the initiated charging process.

4. Method according to one or more of claims 1 to 3, **characterised in that** a vehicle-side memory (14) is checked (28) for a stored contract key and **in that**, in the event of a negative check, the current contract key is written into the memory and is used as the stored contract key.

5. Method according to claim 3 or 4, **characterised in that** a vehicle-side memory (14) is checked (18) for a stored contract key and **in that**, in the event of a positive check, the stored contract key remains in the memory.

6. Method according to one of claims 1 to 5, **characterised in that** a current contract key is stored together with a key status in the vehicle-side memory.

7. Method according to one of claims 1 to 6, **characterised in that** at least one stored contract key and an item of information about an amount of energy procured are emitted on the vehicle side.

8. Method according to one of claims 1 to 7, **characterised in that** the current contract key contains a pair made up of a public contract key and a private contract key.

9. Method for providing communication between an electric vehicle and a billing centre including the steps:
- receiving on the billing centre side information about a charging process of an electric vehicle,
- for the case no contract key is received at the billing centre side,
- enabling (24) on the billing centre side a current contract key, and
- emitting (26, 34) on the billing centre side the current contract key,
- for the case a contract key is received on the billing centre side,
- comparing on the billing centre side, the received contract key with a current contract key and sending out a new current contract key, if the contract key has changed.

10. Method according to claim 9, **characterised in that** information about an initiated charging process is received (22) on the billing centre side and **in that** the current contract key is emitted (26) after the reception of the information about the initiated charging process.

11. Method according to claim 9 or 10, **characterised in that** the current contract key is pushed to the vehicle.

12. Device arranged for carrying out a method according to one of the preceding claims 1 to 8, with
- charging means (12) configured for carrying out on the vehicle side a charging process at a charging station (4),
- communication means (10) configured for emitting on the vehicle side an item of information about the charging process and for receiving on the vehicle side a current contract key after the emission on the vehicle side of the information about the charging process,
- memory means (14) configured for storing a current contract key, and
- comparison means (12) configured for comparing a received current contract key to a stored contract key.

13. System with a device according to claim 12 and a billing centre with
- communication means configured for receiving information about a charging process from an electric vehicle and for emitting a current contract key, and
- processing means configured for enabling a current contract key.

## Revendications

1. Procédé permettant d'établir la communication entre un véhicule automobile électrique et une centrale de comptabilisation, lequel procédé comprend les étapes
a) exécution (28), côté véhicule automobile, d'un processus de charge à une station de charge,
b) émission (30), côté véhicule automobile, d'une information sur le processus de charge, sachant que, dans le cas où aucune clé contractuelle n'est encore mémorisée, côté véhicule automobile, une information adéquate est émise et que, dans le cas où une clé contractuelle est mémorisée, côté véhicule automobile, la clé contractuelle mémorisée est émise, coté véhicule automobile,
c) réception (34), côté véhicule automobile, d'une clé contractuelle actuelle après l'émission, côté véhicule automobile de l'information sur le processus de charge,
d) mémorisation, côte véhicule automobile, de la clé contractuelle reçue.

2. Procédé selon la revendication 1, **caractérisé en ce que,** côté véhicule automobile, un processus de charge est initialisé (20) et qu'une information sur le processus de charge initialisé est émise (22).

3. Procédé selon la revendication 2, **caractérisé en ce que** la clé contractuelle actuelle est reçue (26) après l'émission (22) de l'information sur le processus de charge initié.

4. Procédé selon l'une des revendications 1 à 3, **caractérisé en ce qu'**une mémoire (14), côté véhicule automobile, est contrôlée (28) quant à une clé contractuelle, et que la clé contractuelle actuelle est enregistrée dans la mémoire dans le cas où le résultat du contrôle est négatif.

5. Procédé selon revendication 3 ou 4,
**caractérisé en ce qu'** une mémoire (14) côté véhicule automobile est contrôlé (28) quant à une clé contractuelle et que la clé contractuelle mémorisée reste dans la mémoire dans le cas où le résultat du contrôle est positif.

6. Procédé selon l'une des revendications 1 à 5, caractérisé en ce qu* une clé contractuelle actuelle est mémorisée en commun avec un état de clé dans la mémoire, côté véhicule automobile.

7. Procédé selon l'une des revendications 1 à 6, **caractérisé en ce que,** côté véhicule automobile, au moins une clé contractuelle mémorisée et une information sur la quantité d'énergie prise sont émises.

8. Procédé selon l'une des revendications 1 à 7, **caractérisé en ce que** la clé contractuelle actuelle contient un couple clé contractuelle publique et clé contractuelle privée.

9. Procédé permettant d'établir la communication entre un véhicule automobile électrique et une centrale de comptabilisation, lequel procédé comprend les étapes
- réception, côté centrale de comptabilisation, d'informations sur un processus de charge d'un véhicule automobile électrique,
- dans le cas où aucune clé contractuelle n'est reçue côté centrale de comptabilisation,
- libération (24) d'une clé contractuelle actuelle, côté centrale de comptabilisation, et
- émission (26, 34), côté centrale de comptabilisation, de la clé contractuelle actuelle,
- dans le cas où une clé contractuelle est reçue par la centrale de comptabilisation,
- comparaison, côté centrale de comptabilisation, de la clé contractuelle reçue avec des clés contractuelles actuelles et émission d'une nouvelle clé contractuelle actuelle si la clé contractuelle a changé.

10. Procédé selon la revendication 9,
**caractérisé en ce que** des informations sur un processus de charge initié sont reçues (22) par la centrale de comptabilisation et que la clé contractuelle actuelle est émise (26) après la réception des informations sur le processus de charge initié.

11. Procédé selon revendication 9 ou 10,
**caractérisé en ce que** la clé contractuelle actuelle est délivrée au véhicule automobile.

12. Dispositif, aménagé pour l'exécution d'un procédé selon l'une des revendications 1 à 8, qui comprend
- des moyens de charge (12), qui sont aménagés pour l'exécution, côté véhicule automobile, d'un processus de charge à une station de charge (4),
-- es moyens de communication (10), qui sont aménagés pour l'émission côté véhicule automobile d'une information sur le processus de charge et pour la réception, côté véhicule automobile, d'une clé contractuelle actuelle après l'émission de l'information sur le processus de charge côté véhicule automobile,
sachant que les moyens de communication sont aménagés de sorte que, dans le cas où aucune clé contractuelle n'est mémorisée du côté du véhicule automobile, une information adéquate est émise, et que, dans le cas où une clé contractuelle est mémorisée du côté du véhicule automobile, la clé contractuelle mémorisée est émise,
- des moyens de mémorisation (14), qui sont aménagés pour la mémorisation d'une clé contractuelle actuelle, et
- des moyens de comparaison (12), qui sont aménagés pour établir une comparaison entre une clé contractuelle actuelle reçue et une clé contractuelle mémorisée.

13. Système doté d'un dispositif selon la revendication 12 et d'une centrale de comptabilisation, avec
- des moyens de communication, qui sont aménagés pour recevoir des informations sur un processus de charge d'un véhicule automobile électrique et pour émettre une clé contractuelle actuelle, et
- des moyens de traitement qui sont aménagés pour libérer une clé contractuelle actuelle.
